# EUROPÄISCHE PATENTSCHRIFT

(11) **EP 2 418 391 B1**
(45) Veröffentlichungstag und Bekanntmachung des Hinweises auf die Patenterteilung: **26.12.2012**
(21) Anmeldenummer: 11174358.9
(22) Anmeldetag: 18.07.2011
(51) Int. Cl.: F16B 7/18, B65D 77/04

(54) **Rohrbefestigung zur Verbindung eines Rohres mit einer Tragstruktur sowie Transport- und Lagerbehälter mit einer solchen Rohrbefestigung**
Tube fixing for connecting a tube with a support structure and transport and storage container with such a tube fixing
Fixation de tuyaux destinée au raccordement d'un tuyau à une structure porteuse, ainsi que conteneur de transport et de stockage doté d'une telle fixation de tuyaux

(30) Priorität: 12.08.2010 DE 102010039254
(43) Veröffentlichungstag der Anmeldung: 15.02.2012
(73) Patentinhaber: PROTECHNA S.A., 1701 Fribourg (CH)
(72) Erfinder:
(74) Vertreter: advotec.

(56) Entgegenhaltungen:
- EP-A1- 2 090 520
- US-A- 2 576 049
- US-A- 4 062 167

## Beschreibung

Die vorliegende Erfindung betrifft eine Rohrbefestigung zur Verbindung eines Rohres mit einer Tragstruktur, insbesondere eines horizontalen Gitterrahmenrohres eines mit einer Transportpalette verbundenen Gitterkorbs, der zur Aufnahme eines Flüssigkeitsbehälters dient, wobei das Rohr zur Ausbildung der Rohrbefestigung einen Befestigungsabschnitt mit einer durch Quetschung gebildeten Abflachung aufweist, der mit einem Befestigungsloch zur Aufnahme eines den Befestigungsabschnitt mit der Tragstruktur verbunden Befestigungsbolzens versehen ist, wobei das Befestigungsloch einen Lochrand aufweist, der so ausgebildet ist, dass der Lochrand bezogen auf einen Befestigungsebene, in der der Befestigungsabschnitt mit der Tragstruktur verbunden ist, eine unter einem Winkel α zur Befestigungsebene geneigte Krafteinleitungsebene zwischen einem Bolzenkopf und dem Befestigungsabschnitt definiert. Des Weiteren betrifft die vorliegende Erfindung ein Verfahren zur Herstellung einer derartigen Rohrbefestigung sowie einen mit einer solchen Rohrbefestigung versehenen Transport- und Lagerbehälter für Flüssigkeiten.

Rohrbefestigungen der eingangs genannten Art werden insbesondere zur Befestigung von Gitterkörben von als IBC bezeichneten Transport- und Lagerbehälters für Flüssigkeiten verwendet, bei denen der Gitterkorb zur schützenden Aufnahme eines aus Kunststoff hergestellten Flüssigkeitsbehälters dient, der auf einer Transportpalette angeordnet ist. Da der Innenbehälter eines IBC häufig zur Aufnahme giftiger oder chemisch aggressiver Flüssigkeiten dient, kommt der Zuverlässigkeit der Rohrbefestigungen eine besondere Bedeutung zu.

Zur Befestigung des Gitterkorbes auf der Transportpalette wird ein unteres horizontal verlaufendes Gitterrahmenrohr über Rohrbefestigungen der eingangs genannten Art mit der Transportpalette verbunden. Damit eine Verbindung des Gitterkorbes bzw. des unteren horizontalen Rahmenrohrs mit der Transportpalette von außerhalb des Gitterkorbes erfolgen kann, sind die bekannten Rohrbefestigungen so ausbildet, dass die regelmäßig als Befestigungsschrauben ausgebildeten Befestigungsbolzen mit einer nach außen geneigten Befestigungs- oder Bolzenachse durch ein im Befestigungsabschnitt ausgebildetes Befestigungsloch in einen Palettenboden der Transportpalette eingeschraubt werden können. Hierzu ist ein innerer Lochrandabschnitt des Lochrands des Befestigungslochs aus einer durch den Palettenboden der Transportpalette definierten Befestigungsebene aufgebogen, wohingegen ein äußerer Lochrandabschnitt sich in der Befestigungsebene befindet, so dass sich für den Bolzenkopf der Befestigungsschraube trotz der nach außen geneigten Bolzen- bzw. Einschraubachse sowohl innen als auch außen eine definierte Auflage für den Schraubenkopf ergibt. Dabei stützt sich der Schraubenkopf im Bereich des inneren Lochrandabschnitts lediglich mit einer Umfangskante ab, so dass es bei überhöhtem Schraubenanzugsmoment oder bei ungünstigen Betriebslasten, die bei der Handhabung eines IBC auftreten können, einen Biegemoment auf den Schraubenkopf wirkt, das in ungünstigen Fällen dazu führen kann, dass es zu einem Bauteilversagen durch einen Bruch der Befestigungsschraube bzw. ein Abreißen des Schraubenkopfs kommt.

In der Folge kann es zu Schäden kommen, die den IBC unbrauchbar machen, so dass es ausgelöst durch ein Versagen der Rohrbefestigung zu einem erheblichen wirtschaftlichen Schaden und darüber hinaus bei einer Beschädigung des Innenbehälters infolge des Bauteilversagens zu einem Auslaufen der im Innenbehälter aufgenommenen Flüssigkeit mit entsprechender Umweltbelastung kommen kann. Ebenfalls sind aus anderen Anwendungsbereichen Rohrbefestigungen mit Befestigungsbolzen bekannt. So beschreibt die Druckschrift US 4 062 167 A eine röhrenförmige Stützstrebe, die vornehmlich zum Einsatz im Gerüstbau gedacht ist und deren Enden asymmetrisch geformte Befestigungsabschnitte aufweisen. Dabei ist eine Seite des Befestigungsabschnittes als ebene Fläche ausgebildet, wohingegen die der abgeflachten Oberfläche gegenüberliegende Seite eine Wölbung aufweist. Der Befestigungsabschnitt besitzt eine Durchstecköffnung für einen drehbar gelagerten Bolzen, dessen Achse senkrecht zu der ebenen Fläche verläuft. Auf der gewölbten Seite ist die Öffnung von einem ringförmigen Flansch umgeben. Aufgrund der senkrechten Ausrichtung der Befestigungsachse zur ebenen Oberfläche ermöglicht eine derartige Strebe keine Anwendung in Fällen, die eine geneigte Ausrichtung der Bolzenachse erfordern und wo an der Unterseite des Bolzenkopfes eine möglichst spannungsfreie Auflagefläche gefordert ist.

Der Erfindung liegt daher die Aufgabe zugrunde, eine Rohrbefestigung der eingangs genannten Art vorzuschlagen, die eine zur Befestigungsebene geneigte Orientierung der Einschraubachse bzw. Bolzenachse ermöglicht, ohne das Risiko eines hierdurch bedingten Bauteilversagens. Darüber hinaus liegt der Erfindung die Aufgabe zugrunde, einen Transport- und Lagerbehälter für Flüssigkeiten vorzuschlagen, der eine erhöhte Betriebssicherheit aufweist.

Zur Lösung der Aufgabe weist die erfindungsgemäße Rohrbefestigung die Merkmale des Anspruchs 1 auf. Der erfindungsgemäße Transport-und Lagerbehälter weist zur Lösung der Aufgabe die Merkmale des Anspruchs 8 auf.

Bei der erfindungsgemäßen Rohrbefestigung weist der Lochrand eine Laibung auf, die durch einen sich in Richtung zur Befestigungsebene geneigten Befestigungsachse erstreckenden Ringsteg gebildet ist, der eine in der Krafteinleitungsebene angeordnete Auflagerfläche für den Bolzenkopf definiert.

Durch die erfindungsgemäße Ausgestaltung wird eine flächige Auflage für den Bolzenkopf ermöglicht, die ohne Unterschied sowohl am inneren Lochrandabschnitt als auch am äußeren Lochrandabschnitt gegeben ist. Die Folge hiervon ist eine über den Umfang des Bolzenkopfs gleichmä-βig ausgebildete Krafteinleitung in den Befestigungsabschnitt des Rohres. Darüber hinaus wird durch den sich in Richtung der Befestigungsachse erstreckenden Ringsteg ein Bereich im Befestigungsabschnitt ausgebildet, der bei erhöhten, auf den Bolzenkopf wirkenden Zugspannungen, die als Folge eines erhöhten Schraubenanzugsmoment oder dynamischen Betriebslasten auftreten können, durch entsprechende Deformation einen Spannungsabbau ermöglicht.

Als besonders vorteilhaft erweist es sich, wenn die Auflagerfläche für den Bolzenkopf durch eine am Lochrand von einem Stegfuß des Ringstegs ausgebildete Stülpkante gebildet ist, so dass die Kontaktfläche des Befestigungsabschnitts zum Bolzenkopf durch die glatte Oberfläche des Rohrmaterials gebildet ist und eine von Kerbwirkungen freie Kraftübertragung vom Schraubenkopf auf den Befestigungsabschnitt möglich ist.

Wenn darüber hinaus die Stülpkante eine den angrenzenden Lochrandbereich überragende Randüberhöhung aufweist, die die Kontaktfläche zum Schraubenkopf ausbildet, ist die Kontaktfläche besonders genau definierbar.

Eine besonders schonende Kraftübertragung zwischen dem Befestigungsbolzen bzw. dem Bolzenkopf und dem Befestigungsabschnitt wird möglich, wenn der Befestigungsabschnitt in einem durch das Befestigungsloch verlaufenden Querschnitt einen S-schlagförmig ausgebildeten Lochrand aufweist, so dass nicht nur der Ringsteg des Lochrands, sondern der gesamte Lochrandbereich aufgrund seine geometrischen Ausgestaltung ein besonders hohes Deformationsvermögen aufweist, um ansonsten auf den Bolzenkopf wirkende Spannungsspitzen, die infolge dynamischer Betriebslasten auftreten können, abbauen zu können.

Das erfindungsgemäße Verfahren zur Herstellung einer derartigen Rohrbefestigung weist die Merkmale des Anspruchs 5 auf.

Bei dem erfindungsgemäßen Verfahren erfolgt nachfolgend der Ausbildung einer Abflachung des Rohres in einen Befestigungsabschnitt zunächst die Ausbildung eine Vorbohrung, die ein kleineres Bohrungsmaß aufweist, als dies zur Aufnahme des Befestigungsbolzens notwendig wäre.

Die Ausbildung des Befestigungslochs, das schließlich die Aufnahme bzw. die Durchführung des Befestigungsbolzens ermöglicht, mit einem Durchmesser, der größer ist als der Durchmesser der Vorbohrung erfolgt anschließend in einem Tiefziehvorgang durch Einbringung eines Ziehstempels in die Vorbohrung und Aufweitung der Vorbohrung mit gleichzeitiger Ausbildung eines Ringstegs am Lochrand, der sich aufgrund des infolge des Tiefziehvorgangs einstellen Einstülpens des Lochrands ergibt.

Schließlich erfolgt erfindungsgemäß eine Verschwenkung des Befestigungsabschnitts gegenüber benachbarten Rohrabschnitten, mittels der die Krafteinleitungsebene, also die Ebene in der die Kraftübertragung vom Bolzenkopf des Befestigungsbolzens auf den Befestigungsabschnitt erfolgt, aus der Befestigungsebene geschwenkt wird.

Aufgrund des vorgeschriebenen erfindungsgemäßen Vorgangs einer Ausbildung einer aufgrund des Ringstegs hülsenartigen Lochlaibung wird nicht nur eine über den Umfang gleichmäßige Kraftübertragung zwischen dem Bolzenkopf und dem Befestigungsabschnitt ermöglicht. Vielmehr wird die Ausbildung eines Befestigungslochs, das einen zur Aufnahme des Befestigungsbolzens notwendigen Durchmesser aufweist, ohne eine Form der Materialbearbeitung möglich, die eine Kerbwirkung im Bereich des Lochrands induziert. Stattdessen ist aufgrund des Umformvorgangs der im Material des Befestigungsabschnitts ausgebildete Lochrand um die Höhe des Ringstegs von der Krafteinleitungsebene entfernt.

Als besonders vorteilhaft hat es sich herausgestellt, die Verschränkung des Befestigungsabschnitt gegenüber den benachbarten Rohrabschnitten durch eine Schwenkbewegung des in die Vorbohrung eingebrachten Ziehstempels auszuführen, so dass der Einsatz separater Werkzeuge zur Durchführung des Verschränkungsvorgangs zumindest minimiert wird.

Wenn die Schwenkbewegung des Ziehstempels überlagert mit der Tiefziehbewegung des Ziehstempels erfolgt, lassen sich Verschränkung und Ausbildung des Befestigungsloch im Wesentlichen in einem Umformungsvorgang herstellen.

Der erfindungsgemäß ausgestaltete Transport- und Lagerbehälter für Flüssigkeiten nach Anspruch 8 ermöglicht aufgrund der Rohrbefestigung eine gegen ein Bauteilversagen besonders abgesicherte Verbindung des Gitterkorbs mit der Transportpalette und somit einen verbesserten Schutz des Innenbehälters.

Nachfolgend wird eine Ausführung der Rohrbefestigung und eine Ausstattung eines Transport- und Lagerbehälters mit einer solchen Rohrbefestigung sowie eine Möglichkeit zur Herstellung einer derartigen Rohrbefestigung unter Bezugnahme auf die Zeichnung näher erläutert. Es zeigen:
- **Fig. 1**:: einen IBC mit einem auf einer Transportpalette befestigten Gitterkorb, der einen Innenbehälter aufnimmt;
- **Fig. 2:**: einen Befestigungsabschnitt eines unteren Horizontalrohrs des in **Fig. 1** dargestellten Gitterkorbs;
- **Fig. 3:**: einen freien, unverformten Rohrquerschnitt des Horizontalrohrs;
- **Fig. 4:**: einen durch Quetschung abgeflachten Rohrquerschnitt des Horizontalrohrs;
- **Fig. 5:**: einen durch Tiefziehen umgeformten Befestigungsabschnitt des Horizontalrohrs;
- **Fig. 6:**: eine Rohrbefestigung in Querschnittdarstellung gemäß Schnittlinienverlauf VI-VI in **Fig. 1****.**

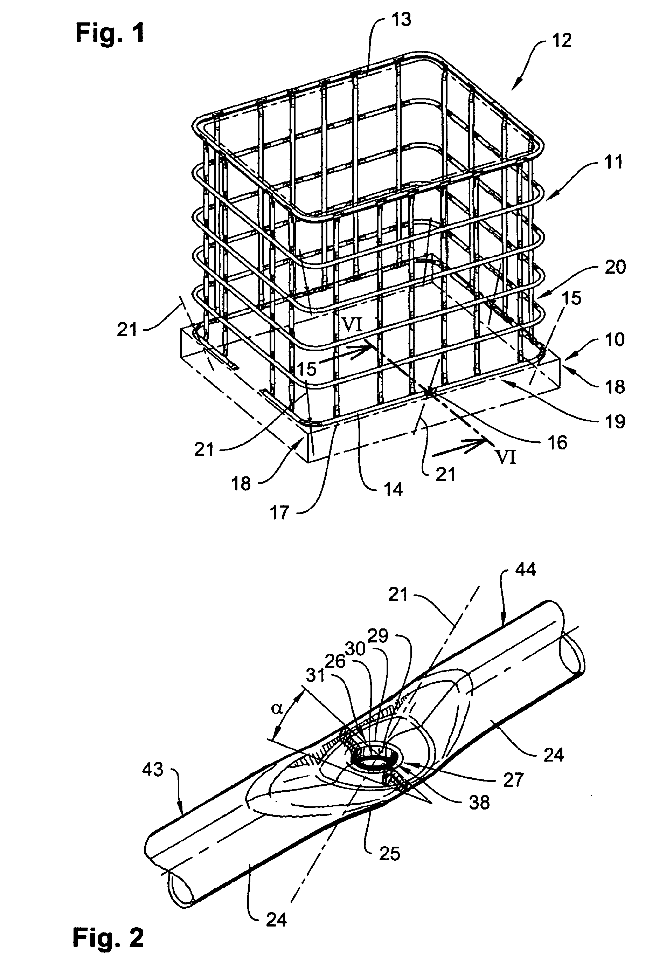

**Fig. 1** zeigt einen auf einer Transportpalette 10 montierten Gitterkorb 11 eines als IBC ausgebildeten Transport- und Lagerbehälters 12, der geschützt durch den Gitterkorb 11 auf der Transportpalette 10 einen Flüssigkeitsbehälter 13 aus Kunststoff aufweist. Wie in **Fig.** 1 durch die Befestigungsachsen 21 angedeutet ist, ist ein unteres Horizontalrohr 14 des Gitterkorbs 11 über mehrere Rohrbefestigungen 15, 16 mit einem Palettenboden 17 der Transportpalette 10 verbunden. Die Rohrbefestigungen 15 befinden sich in Eckbereichen 18 des Gitterkorbs 11 und die Rohrbefestigungen 16 befinden sich in Längsseitenabschnitten 19 und Querseitenabschnitten 20 des Gitterkorbs 11. Abgesehen davon, dass sich die Rohrbefestigungen 15 in den Eckbereichen 18 des Gitterkorbs 11 über gekrümmte Abschnitte des unteren Horizontalrohrs 14 erstrecken, sind diese im Übrigen identisch ausgebildet mit den Rohrbefestigungen 16, die sich in geradlinigen Abschnitten des Horizontalrohrs 14 befinden.

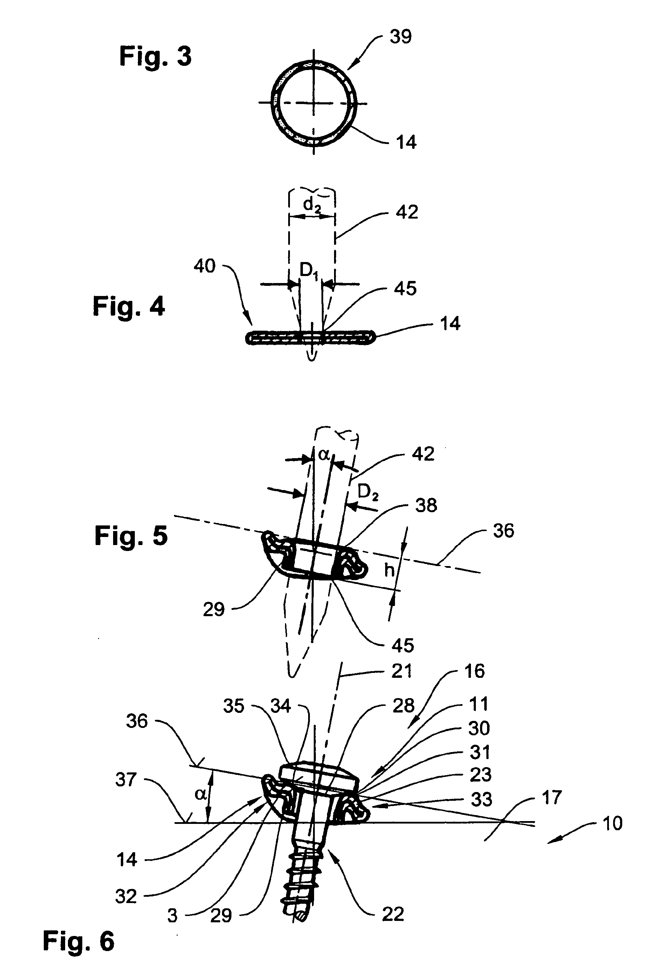

Längs den Befestigungsachsen 21 in **Fig. 1** weisen die Rohrbefestigungen 15, 16 Befestigungsschrauben 22 auf, die wie in **Fig. 6** dargestellt, so ausgerichtet sind, dass zur Herstellung einer Schraubverbindung zwischen dem Gitterkorb 11 und der Transportpalette 10 die Befestigungsschrauben 22 von außerhalb des Gitterkorbs 11 leicht zugänglich und einschraubbar sind.

Der Aufbau einer Rohrbefestigung 16 soll nachfolgend unter Bezugnahme auf einer Zusammenschau der **Fign. 2** und **6** näher erläutert werden. Hierzu ist in **Fig. 6** eine Schnittdarstellung eines Befestigungsabschnitts 23 der in Fig. 1 in dem Längsseitenabschnitt 19 angeordneten Rohrbefestigung 16 mit in den Palettenboden 17 der Transportpalette 10 eingeschraubter Befestigungsschraube 22 dargestellt. **Fig. 2** zeigt den Befestigungsabschnitt 23 zur besseren Erläuterung in einer Einzeldarstellung.

Wie die **Fign. 2** und **6** zeigen, weist der Befestigungsabschnitt 23 eine durch Verformung des freien Rohrquerschnitts 24 ausgebildete Abflachung 25 auf, in der ein Befestigungsloch 26 ausgebildet ist, das einen Lochrand 27 aufweist, der im Querschnitt in etwa S-schlagförmig ausgebildet ist und eine Lochlaibung 28 mit einem Ringsteg 29 aufweist, der im Bereich eines Stegfußes 30 eine Stülpkante 31 ausbildet, die in radial zur Befestigungsachse 21 angeordnete Lochrandabschnitte 32 und 33 übergeht.

Wie insbesondere aus der Darstellung in **Fig. 2** ersichtlich, ist der Lochrand 27 aufgrund der mit dem Ringsteg 29 versehenen Lochleibung 28 im Wesentlichen hülsenartig ausgebildet, wobei der Stegfuß 30 des Ringstegs aufgrund der S-schlagförmigen Ausgestaltung der Lochrandabschnitte 32, 33 im Bereich der Stülpkante 31 eine Randüberhöhung 34 ausbildet, auf der die in **Fig. 6** dargestellte, mit dem Palettenboden 17 verschraubte Befestigungsschraube 22 mit einer Unterseite eines Bolzen- oder Schraubenkopfs 35 aufliegt.

Der Stegfuß 30 des Ringstegs 29 bzw. die Stülpkante 31 definiert eine Auflagerfläche 38 (**Fig. 2**) für den Bolzenkopf 35 der Befestigungsschraube 22, die eine Krafteinleitungsebene 36 vorgibt, welche unter einem Winkel α zu einer Befestigungsebene 37 geneigt ist, die durch den Palettenboden 17 vorgegeben wird.

Wie insbesondere die **Fig. 6** zeigt, ergibt sich aufgrund der durch den Stegfuß 30 des Ringstegs 29 vorgegebenen Auflagerfläche 38 **(****Fig. 2****)** eine an der Unterseite des Bolzenkopfs 35 umlaufend anliegende Auflagerfläche 38 mit einer entsprechend gleichmäßig verteilten Kraftübertragung zwischen dem Bolzenkopf 35 und dem Befestigungsabschnitt 23 der Rohrbefestigung 16. Darüber hinaus bildet der Ringsteg 29 insbesondere im Zusammenwirkung den S-schlagförmig ausgestalteten Lochrandabschnitten 32, 33 einen Deformationskörper, so dass durch Verformungen dieses Deformationskörpers Spannungsspitzen im Befestigungsabschnitt 23 bzw. in den Lochrandabschnitten 32, 33 abgebaut werden können, ohne zu einer zusätzlichen Belastung für die Befestigungsschraube 22 zu führen.

Eine Zusammenschau der **Fign. 3, 4** und **5** verdeutlicht das Verfahren zur Herstellung des in den **Fign. 2** bzw. **6** dargestellten Befestigungsabschnitts 23 der Rohrbefestigung 16. Wie ein Vergleich der Fig. 3 und 4 zeigt, erfolgt zur Herstellung des Befestigungsabschnitt 23 ausgehend von einem freien, unverformten Rohrquerschnitt 39 zunächst ein Quetschung des Rohres 14 zur Herstellung der in **Fig. 4** gezeigten Abflachung 25, bei der gegenüberliegende Innenwandbereiche des Rohrquerschnitts 39 gegeneinander anliegen und der Rohrquerschnitt 39 zu einem Flachquerschnitt 40 umgeformt ist. In dem Flachquerschnitt 40 wird eine Vorbohrung mit einem Durchmesser D₁ eingebracht, wobei der Durchmesser D₁ kleiner ist als ein Durchmesser D₂ des im Befestigungsabschnitt 23 ausgeführten und beispielsweise in **Fig. 6** dargestellten Befestigungslochs 26, das zur Aufnahme bzw. Einführung der Befestigungsschraube 22 dient.

Nachfolgend wird in einem hier nicht näher dargestellten Tiefziehvorgang ein Tiefziehstempel 42 mit einem Außendurchmesser d₂ in die Vorbohrung mit dem Durchmesser D₁ eingeführt, wobei sich zum einen eine Aufweitung mit gleichzeitiger Ausbildung des in **Fig. 5** dargestellten Ringstegs 29 ergibt und zum andern das Befestigungsloch 26 mit dem Durchmesser D₂ ausgebildet wird.

Gleichzeitig mit dem vorstehend erläuterten Tiefziehvorgang erfolgt ein Verschwenken des Tiefziehstempels 42 um den Winkel α zur Ausbildung der in **Fig. 5** dargestellten Verschränkung, derart, dass der Befestigungsabschnitt 23 gegenüber benachbarten, in **Fig. 2** dargestellten unverformten Rohrabschnitten 43, 44 verschränkt und die in **Fig. 6** dargestellte Krafteinleitungsebene 36 ausgebildet wird.

Wie insbesondere aus der Darstellung gemäß **Fig. 5** deutlich wird, wird durch den vorstehend erläuterten Tiefziehvorgang ein durch die Vorbohrung gemäß **Fig. 4** definierte Bohrungsrand 45 aus der Krafteinleitungsebene 36 verlagert und befindet sich in einem der Höhe h des Ringstegs 29 entsprechenden Abstand von der Auflagerfläche 38, die die Krafteinleitungsebene 36 definiert. Somit wird eine durch den Bohrungsrand 45 induzierte Kerbwirkung aus der Krafteinleitungsebene 36 verlagert und kann somit nicht zu einer Schwächung des durch Spannungen belasteten Querschnitts in der Krafteinleitungsebene 36 beitragen.

## Patentansprüche

1. Rohrbefestigung (15, 16) zur Verbindung eines Rohrs mit einer Tragstruktur, insbesondere eines horizontalen Gitterrahmenrohrs eines mit einer Transportpalette (10) verbundenen Gitterkorbes (11), der zur Aufnahme eines Flüssigkeitsbehälters dient, wobei das Rohr zur Ausbildung der Rohrbefestigung einen Befestigungsabschnitt (23) mit einer durch Quetschung gebildeten Abflachung (25) aufweist, der mit einem Befestigungsloch (26) zur Aufnahme eines den Befestigungsabschnitt mit der Tragstruktur verbindenden Befestigungsbolzens (22) versehen ist, wobei das Befestigungsloch einen Lochrand (27) aufweist, der so ausbildet ist, dass der Lochrand bezogen auf eine Befestigungsebene (37), in der der Befestigungsabschnitt mit der Tragstruktur verbunden ist, eine unter einem Winkel α zur Befestigungsebene geneigte Krafteinleitungsebene (36) zwischen einem Bolzenkopf (35) und dem Befestigungsabschnitt definiert,
**dadurch gekennzeichnet,**
**dass** der Lochrand eine Lochlaibung (28) aufweist, die durch einen sich in Richtung einer zur Befestigungsebene (37) geneigten Befestigungsachse (21) erstreckenden Ringsteg (29) gebildet ist, der eine in der Krafteinleitungsebene angeordnete Auflagerfläche (38) für den Bolzenkopf definiert.

2. Rohrbefestigung nach Anspruch 1,
**dadurch gekennzeichnet,**
**dass** die Auflagerfläche (38) durch eine am Lochrand (27) von einem Stegfuß (30) des Ringstegs (29) gebildete Stülpkante (31) gebildet ist.

3. Rohrbefestigung nach Anspruch 2,
**dadurch gekennzeichnet,**
**dass** die Stülpkante (31) eine den angrenzenden Lochrandbereich überragende Randüberhöhung (34) aufweist.

4. Rohrbefestigung nach einem der Ansprüche 1 bis 3,
**dadurch gekennzeichnet,**
**dass** der Befestigungsabschnitt (23) in einem durch das Befestigungsloch (26) verlaufenden Querschnitt einen S-schlagförmig ausgebildeten Lochrand (27) aufweist.

5. Verfahren zur Herstellung einer Rohrbefestigung (15, 16) zur Verbindung eines Rohrs mit einer Tragstruktur, bei dem ausgehend von einem Rohr mit einem freien Rohrquerschnitt (24) eine Umformung eines Rohrabschnitts durch Quetschung zur Ausbildung einer Abflachung (25) des Rohrs in einem Befestigungsabschnitt (23) erfolgt, **gekennzeichnet durch** die Verfahrensschritte:
- Ausbildung einer Vorbohrung (41) mit einem Durchmesser D₁ im Befestigungsabschnitt (23) mit einem umlaufend ausgebildeten Lochrand (27);
- Ausbildung eines Befestigungslochs (26) mit einem Durchmesser D₂ **durch** Einbringung eines Ziehstempels (42) in die Vorbohrung und Aufweitung der Vorbohrung mit gleichzeitiger Ausbildung eines eine Lochlaibung (28) bildenden Ringstegs (29) am Lochrand (27);
- Verschränkung des Befestigungsabschnitts (23) gegenüber benachbarten Rohrabschnitten (43, 44), derart, dass der Ringsteg (29) sich in Richtung einer zur Befestigungsebene (37) geneigten Befestigungs achse (21) erstreckt und eine in der Krafteinleitungsebene angeordnete Auflagerfläche (38) für einen Bolzenkopf definiert.

6. Verfahren nach Anspruch 5,
**dadurch gekennzeichnet,**
**dass** die Verschränkung des Befestigungsabschnitts (23) gegenüber den benachbarten Rohrabschnitten (43, 44) durch eine Schwenkbewegung des in die Vorbohrung (41) eingebrachten Ziehstempels (42) erfolgt.

7. Verfahren nach Anspruch 6,
**dadurch gekennzeichnet,**
**dass** die Schwenkbewegung des Ziehstempels (42) überlagert mit der Tiefziehbewegung des Ziehstempels erfolgt.

8. Transport- und Lagerbehälter (12) für Flüssigkeiten, mit einem Innenbehälter (13) aus Kunststoff mit einem verschließbaren Einfüllstutzen und einem Entleerstutzen zum Anschluss einer Entnahmearmatur, einem Außenmantel, der als ein aus vertikalen und horizontalen Gitterrahmenrohren (14) zusammengesetzter Gitterkorb (11) ausgebildet ist, sowie einer als Transportpalette (10) ausgebildeten Tragstruktur, die zur Handhabung mittels Hubstapler, Regalbediengerät o.dgl. Transportmittel eingerichtet ist, wobei die Transportpalette einen Palettenboden (17) zur Abstützung des Innenbehälters aufweist und zur Verbindung des Gitterkorbs mit der Transportpalette ein dem Palettenboden benachbartes horizontales Gitterrahmenrohr mittels einer Rohrbefestigung (15, 16) nach einem der Ansprüche 1 bis 4 mit der Transportpalette verbunden ist.

## Claims

1. A pipe mounting (15, 16) for connecting a pipe to a support structure, particularly a horizontal space frame pipe of a wire basket (11), which is connected to a transport pallet (10) and serves the purpose of receiving a container for liquids, wherein, for forming the pipe mounting, the pipe comprises a mounting section (23), which is equipped with a flat section (25) formed by squashing and with a mounting hole (26) for receiving a mounting bolt (22) connecting the mounting section to the support structure, wherein the mounting hole comprises a hole edge (27), which is formed in such a way that, relative to a mounting plane (37) in which the mounting section is connected to the support structure, the hole edge defines a force application plane (36), inclined at an angle α toward the mounting plane, between a bolt head (35) and the mounting section, **characterized in that**
the hole edge comprises an inside of hole (28), which is formed by an annular rim (29) which extends in the direction of a mounting axis (21) inclined toward the mounting plane (37) and which defines a support surface (38), which is arranged in the force application plane, for the bolt head.

2. The pipe mounting according to Claim 1,
**characterized in that**
the support surface (38) is formed by a cuff-shaped edge (31) formed by a rim base (30) of the annular rim (29) at the hole edge (27).

3. The pipe mounting according to Claim 2,
**characterized in that**
the cuff-shaped edge (31) comprises an edge elevation (34) higher than the adjacent hole edge area.

4. The pipe mounting according to one of the Claims 1 to 3, **characterized in that**
the mounting section (23) comprises a S-shaped hole edge (27) in a cross-section passing through the mounting hole (26).

5. A process for producing a pipe mounting (15, 16) for connecting a pipe to a support structure, in which, assuming the pipe to have a free pipe cross-section (24), a pipe section is formed by squashing in order to form a flat section (25) of the pipe in a mounting section (23),
**characterized by** the following process steps:
- Forming a pre-bore (41) with a diameter D₁ in the mounting section (23) with a surrounding hole edge (27);
- Forming a mounting hole (26) with a diameter D₂ by introducing a drawing punch (42) into the pre-bore and enlarging the pre-bore while simultaneously forming an annular rim (29), which forms an inside of hole (28), at the hole edge (27);
- Twisting the mounting section (23) relative to adjacent pipe sections (43, 44) in such a way that the annular rim (29) extends in the direction of a mounting axis (21) inclined toward the mounting plane (37) and defines a support surface (38), which is arranged in the force application plane, for a bolt head.

6. The process according to Claim 5,
**characterized in that**
the twisting of the mounting section (23) relative to the adjacent pipe sections (43, 44) is realized by a swiveling movement of the drawing punch (42) which is introduced into the pre-bore (41).

7. The process according to Claim 6,
**characterized in that**
the swiveling movement of the drawing punch (42) is realized in an overlapping manner with the deep drawing movement of the drawing punch.

8. A transport and storage container (12) for liquids, including a plastic inner container (13) including a closable filling neck and a drain for connecting a tapping armature, an outer mantle, which is formed as a wire basket (11) composed of vertical and horizontal space frame pipes (14), as well as a support structure which is formed as a transport pallet (10) and is arranged for handling with a stacker truck, a storage and retrieval machine or other similar means of transportation, wherein the transport pallet comprises a pallet bottom (17) for supporting the inner container and wherein a horizontal space frame pipe adjacent to the pallet bottom is connected to the transport pallet by means of a pipe mounting (15, 16) according to any one of the claims 1 to 4 for the purpose of connecting the wire basket to the transport pallet.

## Revendications

1. Fixation de tube (15, 16) pour connecter un tube à une structure de support, en particulier un châssis tubulaire horizontal d'un panier en fil (11) qui est connecté à une palette de transport (10) et qui sert à recevoir une cuve pour liquides, dans lequel, pour former la fixation de tube, le tube comprend une partie de fixation (23) avec une partie plate (25) formée par aplatissement et avec un trou de fixation (26) pour réception d'un boulon de fixation (22) connectant la partie de fixation à la structure de support, dans lequel le trou de fixation comprend un bord de trou (27) qui est formé de telle façon que, par rapport à un plan de fixation (37), dans lequel la partie de fixation est connecté à la structure de support, le bord de trou définit un plan d'emploi de force (36) avec un certain angle d'inclinaison α vers le plan de fixation entre une tête de boulon (35) et la partie de fixation, **caractérisée en ce que**
le bord de trou comprend un intérieur de trou (28) qui est formé par un bord annulaire (29) qui s'étend en direction d'un axe de fixation (21) avec un certain angle d'inclinaison vers le plan de fixation (37) et qui définit une surface de support (38) arrangée dans le plan d'emploi de force pour la tête de boulon.

2. Fixation de tube selon la revendication 1,
**caractérisée en ce que**
la surface de support (38) est formée par un bord en forme de revers (31) formé par un pied de bord (30) du bord annulaire (29) au bord de trou (27).

3. Fixation de tube selon la revendication 2,
**caractérisée en ce que**
le bord en forme de revers (31) comprend une élévation de bord (34) plus haut que la région de bord de trou adjacente.

4. Fixation de tube selon l'une des revendications 1 à 3,
**caractérisée en ce que**
la partie de fixation (23) comprend un bord de trou (27) en forme de S dans une coupe transversale qui passe par le trou de fixation (26).

5. Procédé de production d'une fixation de tube (15, 16) pour connecter un tube à une structure de support, dans lequel, à supposer un tube avec une coupe transversale de tube (24) non-déterminé, une partie de tube est transformée par aplatissement pour former une partie plate (25) du tube dans une partie de fixation (23),
**caractérisé par** les étapes de procédé :
- Former un pré-forage (41) avec un diamètre D₁ dans la partie de fixation (23) avec un bord de trou (27) entourant;
- Former un trou de fixation (26) avec un diamètre D₂ par l'introduction d'un poinçon d'emboutissage (42) dans le pré-forage et élargissement du pré-forage tout en formant un bord annulaire (29) formant un intérieur de trou (28) au bord de trou (27);
- Tordre la partie de fixation (23) par rapport à des parties de tube adjacentes (43, 44) de telle façon que le bord annulaire (29) s'étend en direction d'un axe de fixation (21) avec un certain angle d'inclinaison vers le plan de fixation (37) et définit une surface de support (38) arrangée dans le plan de d'emploi de force pour une tête de boulon.

6. Procédé selon la revendication 5,
**caractérisé en ce que**
tordre la partie de fixation (23) par rapport à les parties de tube adjacentes (43, 44) est réalisée par un mouvement de pivotement du poinçon d'emboutissage (42) introduit dans le pré-forage (41).

7. Procédé selon la revendication 6,
**caractérisé en ce que**
le mouvement de pivotement du poinçon d'emboutissage (42) se produit de manière chevauchante avec le mouvement d'emboutissage profond du poinçon d'emboutissage.

8. Cuve de transport et stockage (12) pour liquides, comprenant une cuve intérieure (13) en matière plastique comprenant une tubulure de remplissage fermable et un drain pour connecter une armature de soutirage, une gaine extérieure qui est formée comme un panier en fil (11) composé de châssis tubulaires (14) verticaux et horizontaux ainsi qu'une structure de support qui est formée comme une palette de transport (10) et qui est outillée pour traitement au moyen d'un chariot élévateur, d'un appareil de stockage et de déstockage ou de ce genre de moyens de transport, dans lequel la palette de transport comprend un fond de palette (17) pour support de la cuve intérieure et dans lequel, pour connecter le panier en fil à la palette de transport, un châssis tubulaire horizontal adjacent au fond de palette est connecté à la palette de transport au moyen d'une fixation de tube (15, 16) selon l'une des revendications 1 à 4.
